(19) Europäisches Patentamt

European Patent Office

Office européen des brevets

(11) **EP 1 437 655 A2**

(12) **EUROPÄISCHE PATENTANMELDUNG**

(43) Veröffentlichungstag:
**14.07.2004 Patentblatt 2004/29**

(51) Int Cl.⁷: **G06F 9/46**

(21) Anmeldenummer: 03102629.7

(22) Anmeldetag: **22.08.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **24.09.2002 DE 10244459**

(71) Anmelder: **SIEMENS AKTIENGESELLSCHAFT**
**80333 München (DE)**

(72) Erfinder: **Heidenreich, Gert**
**71384, Weinstadt (DE)**

(54) **Rechner- und/oder Software-Architektur unter Verwendung von Micro-Kernel- und Multi-Tier-Konzept mit Komponententechnik**

(57) Die Erfindung betrifft ein Verfahren und ein System für eine Rechnerarchitektur bei verteilten Client/Server-Systemen, bei dem das System nach einem Multi-Tier-Modell organisiert ist und zumindest eine erste Präsentationsschicht (10), eine zweite Schicht (12) und eine dritte Datenschicht (13) umfaßt. Die zweite Schicht (12) ist vollständig als micro-kernelbasiertes Client/Server-System organisiert. Zwischen der ersten und zweiten Schicht (10, 12) ist eine Schnittstelle in Form einer Message (14) festgelegt, wobei ein Serverauftrag zumindest folgende Schritte umfaßt:

- der Client (C) generiert eine Message (14) und sendet die Message (14) an den Server (S). Falls notwendig, wird der Auftrag weitergeleitet und vollständig abgearbeitet. Das Ergebnis des Auftrages wird anhand der Message (14) zurück gesendet.

FIG 5

CLIENT generiert Message mit aktueller Frage-Transkation

SERVER generiert Message mit aktueller Antwort-Transkation

CLIENT leitet Frage-Transaktion in Sende-FIFO und kehrt zurück

SERVER leitet Antwort-Transaktion in Sende-FIFO und kehrt zurück

PROGRAMMTEIL holt Frage-Transaktion aus Sende-FIFO und leitet Message mit Routing Info's in zweiter Schicht bis zum Empfangs-FIFO des SERVERS und kehrt zurück

PROGRAMMTEIL holt Antwort-Transaktion aus Sende-FIFO und leitet Message mit Routing Info's in zweiter Schicht bis zum Empfangs-FIFO des CLIENTS und kehrt zurück

SERVER holt Frage-Transaktion aus Empfangs-FIFO und bearbeitet diese

CLIENT holt Antwort-Transaktion aus Empfangs-FIFO, erfaßt Zeitstempel der Message und bestimmt dazugehörige Frage-Transaktion

EP 1 437 655 A2

**Beschreibung**

Die Erfindung betrifft die Rechnerarchitektur für den Ablauf von Software Applikationen und vorzugsweise ein Verfahren und ein System zur Steuerung und/oder Organisation eines Applikationsprozesses in einem verteilten System mit mindestens einem Client und mindestens einem Server, bei dem das System nach einem sogenannten Multi-Tier-Modell organisiert ist und zumindest eine erste Präsentationsschicht, eine zweite Schicht und eine dritte Datenschicht umfaßt.

Da die Entwicklung von Software grundsätzlich teuer und schnellen Änderungen unterworfen ist, sollte eine Architektur gewählt werden, die folgende Punkte berücksichtigt:

- eine Modularisierung in Form von kleinen Software Komponenten unterstützt,
- einfache Kommunikation zwischen den Komponenten erlaubt,
- Ausrichtung an Industriestandards mit dem Ziel Drittsoftware mit verwenden zu können,
- Skalierung über eine variable Anzahl von Rechnern nur mit Administrationsaufwand und
- Anpassbarkeit an spezifische Kundenprofile nur mit Administrationsaufwand ist möglich,
- Sicherstellung der Funktion und Benutzbarkeit alten Codes und
- Unterstützung eines leistungsfähigen Patching-Konzepts.

Deshalb sind bisher im Stand der Technik Architekturen vorgeschlagen worden, die diese Punkte möglichst weitgehend berücksichtigen.

Als ein älterer Ansatz ist hier die reine Client Server Struktur zu nennen. Die Darstellungsschicht stellt hier den Datenbank Client und die Datenschicht das Datenbank Management System (DBMS) dar. Hier führte die Trennung (Modularisierung) von Grafik und Datenverarbeitung dazu, dass in der Darstellungsebene mit SQL Statements gearbeitet wird und in der Datenebene mit Hilfe von Stored Procedures und Pass Through Techniken problemspezifischer Code implementiert werden muss.

Obwohl dies sehr schnelle Lösungen erlaubt, hat man bei Software Änderungen viele verschiedene Orte in den Programm Sources, an denen die Konsequenzen der Änderung (sogenannte side effects) beachtet werden müssen. Dies erweist sich als sehr fehleranfällig.

Als unvorteilhaft erweist es sich in der Praxis nämlich, daß die jeweils miteinander kommunizierenden Prozesse von Client einerseits und Server andererseits sehr viel voneinander wissen müssen, so daß ein problemloser Datentransfer ermöglicht wird. Dies führt nachteiligerweise wiederum zu einer hohen Anzahl von expliziten Eingriffen bei Änderungen oder Anpassungen etwa hinsichtlich der Gültigkeit oder Zugriffsrechten.

Die asynchrone Rückantwort für eine Datenbank Anfrage kann über in diesem Modell nach dem Stand der Technik über eine Callback Schnittstelle realisiert werden. Hierbei wird über den client-seitigen Aufruf dem DBMS der Aufrufpunkt der Funktion mitgegeben, die dann die Ergebnisse erhält. Vorher muss aber das DBMS dem Aufrufer Informationen über den Typ der erwarteten Callback Schnittstelle liefern. Als nachteilig erweist es sich jedoch, dass das Einrichten einer Callback Funktion einen erheblichen Aufwand darstellt, der dann anwächst, falls es sich um eine verteilte Applikation handelt und Verweise bzw. Pointer noch über Rechnergrenzen hinweg verwaltet werden müssen.

Alle diese Probleme führten in Stand der Technik zu einem weiteren Ansatz, dem Multi Tier Ansatz, der es erlaubt auf Callbacks zu verzichten.

Eine Multi Tier Architektur enthält mindestens 3 Schichten (hier Tiers genannt):

- eine erste Schicht, die Darstellungs- bzw. Präsentationsschicht mit den Grafikkomponenten,
- eine zweite, mittlere Schicht (auch Middle Tier genannt) mit der Business Logik und
- eine dritte Datenschicht mit den Datenbanken.

Die drei Schichten kommunizieren über Schnittstellen, indem sie Aufrufe von "oben nach unten" - also von der ersten bis zur dritten Schicht - bearbeiten. Die jeweiligen Rückantworten werden nach Bearbeitung wieder als sogenannte Return Values von unten nach oben weitergereicht.

Als problematisch hat es sich hier erwiesen, daß der aktive Teil des Prozesses der aufrufenden Komponente (ein sogenannter Thread) der ersten Schicht so lange blockiert bleibt, bis das Ergebnis aus der dritten Schicht, nämlich meistens das Ergebnis einer Datenbankabfrage, vorliegt.

Hier werden alle Prozesse, die die dritte Schicht betreffen, nämlich Datenbank spezifischer Code, in die mittlere Schicht herausgezogen und somit eine Entkopplung von dem DBMS zu erreichen. Der Nachteil ist, dass Änderungen beim Zugriff auf die Datenbank, nun in mehreren Komponenten vorgenommen werden müssen.

Ein weiterer Ansatz für eine Betriebssystem Architektur ist das theoretischen Arbeiten an der Carnegie Mellon University entstammende MACH Modell. Dieses Modell basiert auf einem Micro Kernel Ansatz und erfordert eine konsequente Client Server Struktur. Dabei enthält der Kernel bzw. Kern nur Clients, während die Peripherie die vollen Dienstleistungen, also die Server umfaßt. Benötigt ein Server die Dienstleistung eines anderen Servers, so sendet er eine Anfrage durch den Micro Kernel.

Dieses Konzept wird für Betriebsysteme und deren Prozesse, wie beispielsweise die Interprozess-Kommunikation oder Dateiverwaltungs-Strategien eingesetzt. In Hinblick auf die Organisation von Applikationsprozessen unterstützt es bislang allerdings nicht die erforderliche Entkopplung zwischen den verschiedenen Schichten.

Zur Vermeidung der genannten Nachteile und unter Beibehaltung der vorteilhaften und gewünschten Entkopplung der jeweiligen Schichten des Multi-Tier-Modells, ist es wünschenswert, dieses insofern weiter zu entwickeln, als daß die mittlere Schicht über gleichrangige Software Komponenten dezentral organisiert ist.

Aufgabe der Erfindung ist es deshalb, eine Software Architektur für einen Applikationsprozess zu schaffen, die die Vorteile des Multi-Tier-Konzeptes und die des Micro Kernel-Prinzips vereint.

Diese Aufgabe wird durch ein Verfahren der eingangs genannte Art gelöst, bei dem die zweite Schicht vorzugsweise zumindest einen Server umfaßt und vollständig als microkernel-basiertes Client/Server-System organisiert ist und bei dem zwischen der ersten und zweiten Schicht eine Schnittstelle in Form einer Message festgelegt ist, wobei ein Serverauftrag zumindest folgende Schritte umfaßt:

- der Client übersetzt den Serverauftrag in eine Message mit den jeweiligen Argumenten,
- der Client sendet die Message an den Server vorzugsweise aus der mittleren Schicht,
- der Auftrag wird gegebenenfalls weitergeleitet und vollständig abgearbeitet und
- das Ergebnis des Auftrages wird anhand der Message zurückgesendet.

Weiterhin wird diese Aufgabe gelöst durch ein Client/Server-System nach Anspruch 18, ein Computerprogramm gemäß Anspruch 19, ein Computerprogrammprodukt gemäß Anspruch 20 und eine Vorrichtung nach Anspruch 21.

Entsprechend der erfindungsgemäßen Struktur ist die zweite Schicht bzw. das Middle-Tier ausschließlich für ein Routing des Serverauftrages ausgelegt und benötigt kein clientspezifisches Wissen.

Der Serverauftrag, der im allgemeinen in einer Anfrage (an eine Datenbank) und in einer Antwort (Ergebnis der Datenbank Query) besteht ist erfindungsgemäß in eine "Frage-Transaktion" - ausgehend von dem Client an den Server - und in eine "Antwort-Transaktion" - ausgehend von dem Server an den Client - zerlegt. Diese sind physikalisch voneinander entkoppelt, so dass die Messages vollständig asynchron zueinander gehalten werden.

In einer bevorzugten Ausführungsform der Erfindung gehört der Client der ersten Schicht und der Server der zweiten und/oder dritten Schicht an.

Der Server liefert nach Abarbeitung des Auftrages ein Ergebnis des Auftrages an den aufrufenden Client oder eine andere Zieladresse.

Dabei ist die Rücksendeadresse des Serverauftrages in der Message enthalten.

Erfindungsgemäß wird das Middle-Tier vollständig im Micro Kernel realisiert. Die Server realisieren alle Dienstleistungen des Systems.

Die Message eines Clients aus der ersten Schicht wird stets unmittelbar an eine Wurzelkomponente des Micro Kernels der zweiten Schicht gesendet, der die Message dann an eine Verarbeitungskomponente weiterleitet.

Bevorzugterweise umfaßt der Micro Kernel der zweiten Schicht mehrere Subsysteme, die ihrerseits in eine oder mehrere Komponenten aufgeteilt sind. Dies führt vorteilhafterweise zu einem hohen Grad an Modularität und macht das System insofern flexibel, da die Dienstleistung eines Servers auf mehrere Komponenten aufgeteilt werden kann, ohne daß der Verwaltungsaufwand hinsichtlich der Adressen steigt.

Ein wesentlicher Vorteil ist auch darin zu sehen, daß Dienstleistungen bzw. Dienstleisungsserver auch während des Betriebs entfernt, verändert oder hinzugefügt werden können und daß alter Applikations-Code ohne Einschränkungen in das System eingebunden werden kann.

Ein Vorteil liegt in der transparenten Inter Modul Kommunikation. Durch das erfindungsgemäße Festlegen einer Schnittstelle, muß sich beispielsweise ein beteiligter Entwickler nicht um die Kommunikation mit anderen Modulen kümmern. Die einzige übergreifende Plattform ist die Spezifikation der Messages. Diese ist umgangssprachlich orientiert und verlangt kein zusätzliches Wissen.

Ein wichtiger Punkt ist die Nutzung aller Vorteile der Asynchronität bei der Kommunikation untereinander, ohne auf Callbacks zurückgreifen zu müssen. Sie stellen einen fehlerträchtigen Bereich dar, der dann auch immer nur mit tiefem Wissen und komplizierten Entwicklungswerkzeugen bearbeitet werden kann.

Bedingt durch die Asynchronität der Messages, sind viele Message Passing Aktionen gleichzeitig möglich, um die Reaktivität des Systems zu erhöhen. Dies führt aber zum gleichzei tigen Aufruf der Komponenten durch verschiedene Threads. Diese müssen im Normalfall synchronisiert werden.

Da in den Komponenten der zweiten Schicht bzw. in den sogenannten Business Logik Komponenten nur eine lesende Anfrage bei der Datenbank, der sogenannte Routing Datenbank, und das Umkopieren der Argumente durchgeführt wird, ist in diesem Fall keine Thread Synchronisierung nötig. Es werden nur funktionslokale Daten verwendet, die zu einem Thread Kontext gehören. Dies erlaubt in Windows-basierten Systemen den Einsatz von COM Objekten im Multi Threaded Apartement (MTA).

Durch das Festlegen des Message-Ziels schon im sendenden Dienstleistungsserver, ist keine weitere Stelle mehr involviert, was die Zielplanung anbetrifft. Es ist von jedem Server aus möglich eine Kommunikation zwischen zwei anderen Server auszulösen, da diese Informationen mit der Message transparent durch das System kopiert werden.

Durch das späte Routing wird die Verteilbarkeit und Skalierbarkeit der Multi Tier und Micro Kernel Ansätze verbessert. Es ist Administratoren ohne Kenntnisse des Innenlebens der Dienstleistungsserver jederzeit möglich, die Verteilung der Komponenten über verschiedene Server zu verändern.

Ein weiterer Vorteil des Message-Pfades, liegt in dem potentiellen Einsatz identischer Befehle für unterschiedliche Dienstleistungsserver oder mit unterschiedlichen Datenfeldern.

Mit der Zeit können neue Dienstleistungsserver hinzukommen. Diese können dann über die existierende Infrastruktur alle Dienstleistungen der anderen Server nutzen, ohne dass die Entwickler im Detail die Sourcetexte kennen müssen. Mit Anwendung der existierenden Messages, passen sie die Neuerungen nahtlos ins Gesamtsystem ein.

Die verbindliche Interface Spezifikation in Form einer Message ist in einer bevorzugten Ausführungsform der Erfindung vom Typ "String" und wird durch die Argumente der Funktionen der Interfaces weitergegeben. Eine Message wird immer übergeben, in dem die entsprechenden Argumente der Funktion des aufgerufenen Interfaces vom Aufrufer versorgt werden. Dadurch ist aus der Sicht des Aufrufers das Message-Passing vollständig durchgeführt und abgeschlossen.

Der Inhalt der Messages ist Gegenstand der Spezifikation der jeweiligen Applikation. Diese muss aber nicht nur den Inhalt des Befehls und des Datenfeldes festlegen, sondern auch deren Syntax beschreiben. In dieser Ausführungsform hat die Message folgende Struktur:

"Kategorie+Subsystem+Befehlsgruppe+Befehl+Zeitstempel+Steuerfeld+

Ursprung+Quellname+Zielname+Nutzdaten"

Jeder String, getrennt durch das Pluszeichen, ist ein eigenes Argument der Interface-Funktionen. So ist gewährleistet, dass sich die Stringmanipulationen zum Gewinnen der Informationen auf ein Minimum reduzieren.

Weitere Vorteile, Merkmale und alternative, nicht einschränkend zu verstehende Ausführungsformen der Erfindung sind in der nachfolgenden, detaillierten Figurenbeschreibung zu finden, die in Zusammenhang mit der Zeichnung zu lesen ist und in der:

Fig. 1 eine schematische Darstellung einer bekannten Multi Tier Architektur aus dem Stand der Technik,

Fig. 2 eine schematische Darstellung von verschiedenen Komponenten einer zweiten Schicht eines erfindungsgemäßen Micro Kernels,

Fig. 3 eine schematische Darstellung einer erfindungsgemäßen Organisation,

Fig. 4 eine beispielhafte Darstellung einer Frage- und Antwort-Transaktion eines Dienstleistungs-ServerAuftrages und

Fig. 5 ein Ablauf Diagramm des erfindungsgemäßen Verfahrens zeigen.

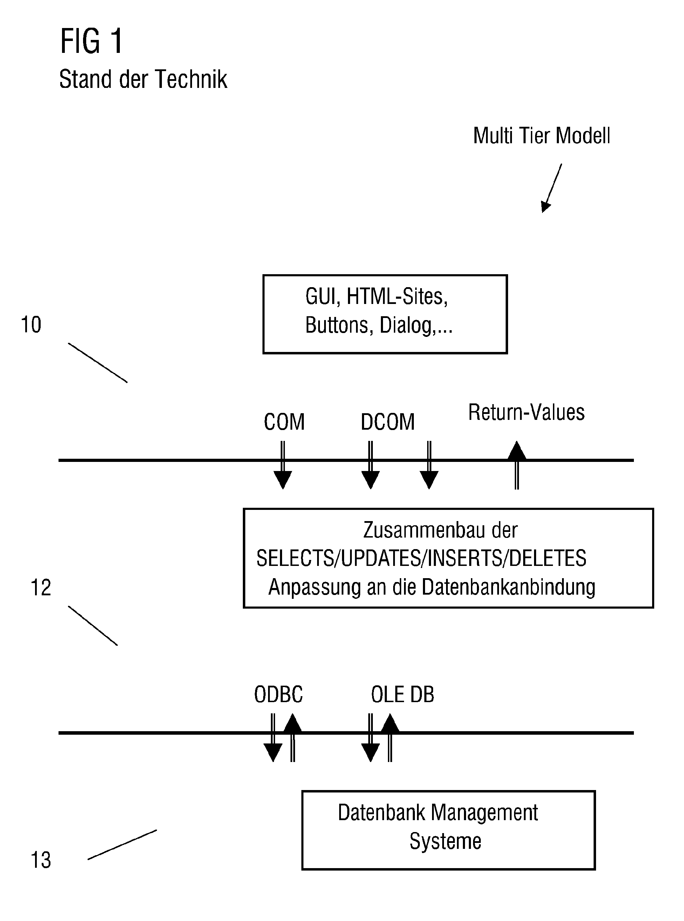

Figur 1 zeigt das grundlegende, aus dem Stand der Technik bekannte Mulit Tier Modell, das hier aus drei Schichten (auch Tiers genannt) besteht: einer ersten Präsentationsschicht 10, einer zweiten bzw. mittleren Schicht 12 und einer dritten Datenschicht 13. Die Aufrufe der ersten in die zweite Schicht erfolgen bei Microsoft-basierten Systemen über COM oder DCOM Schnittstellen. Die Rückantworten erfolgen über Return Values des jeweiligen COM oder DCOM Aufrufes. Die zweite Schicht 12 dient zur Generierung von Datenbank-Abfragen, z.B. SQL Queries, und muß daher die Struktur der dritten Schicht kennen. Die dritte Schicht 13 beinhaltet die Daten und ein Datenbank Management System. Nachteilig bei diesem Aufbau aus dem Stand der Technik ist, daß ein aktiver Teil eines Client-Prozesses, ein sogenannter Thread, solange blockiert bleibt, bis der Datenbank Zugriff abgeschlossen ist. Dies führt zu langen Wartezeiten und zu verminderter Leistungsfähigkeit des Gesamtsystems.

Bei der erfindungsgemäßen Lösung ist die Entkopplung der Prozesse zwischen den jeweiligen Tiers 10, 12, 13 ebenfalls beibehalten worden. Doch das Middle Tier bzw. die mittlere Schicht 12 ist anders - nämlich nach einem Micro Kernel Prinzip - organisiert. Dafür ist eine feste Schnittstelle in Form einer Message 14 für das Middle Tier 12 entwickelt worden. Weiterhin werden erfindungsgemäß (modulare) Komponenten eingesetzt, die zumindest Teile einer Server-Dienstleistung realisieren.

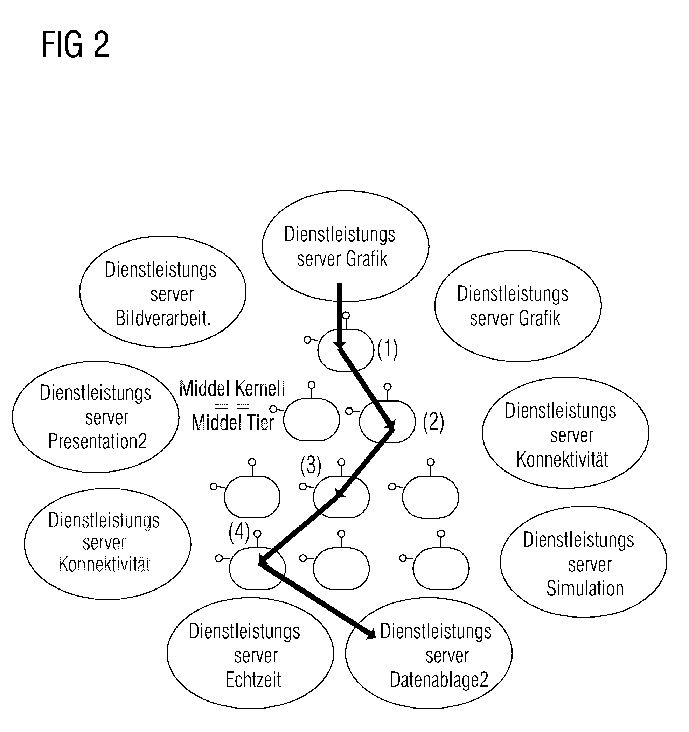

Unter Bezugnahme auf Figur 2 wird nachstehend die grundlegende erfindungsgemäße Struktur erläutert. Die Verbindung des Multi Tier Ansatzes und des Micro Kernel Prinzips nutzt einen kurzzeitigen Rollenwechsel (vom Empfänger zum Sender) zwischen Client C und Server S . Das Middle Tier 12 wird komplett im Micro Kernel realisiert, wobei die Satteliten darum herum sowohl aus der ersten Schicht 10 als auch aus der Datenschicht 13 stammen können und auch Subsysteme genannt werden. Allgemein gesprochen realisieren sie alle Dienstleistungen.

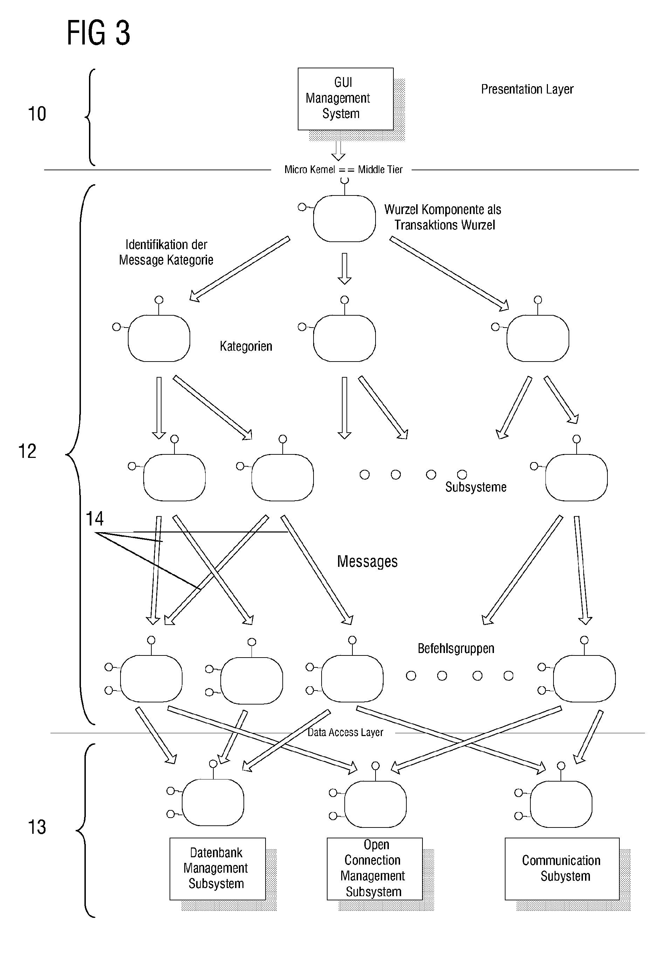

Wie in Figur 3 gezeigt, beruht der Micro Kernel auf strikter Client Server Architektur. Der Client C gibt einen Auftrag in Form einer Message 14 und beendet dann den Aufruf. Danach ist der Client C wieder frei und kann weitere Prozesse bearbeiten.

Der Auftrag wird vom ausgewählten Subsystem bearbeitet, ohne dass das fragende Subsystem oder die mittlere Schicht 12 noch blockieren, da der Auftrag ja an das ausführende Subsystem abgegeben wurde. Ist das angefragte Subsystem mit der Bearbeitung der Message 14 fertig, wird es nun seinerseits zum Frager bzw. Client C und ruft ein Zielsubsystem auf die genau gleiche Art und Weise auf (z.B. den ursprünglichen Frager), um seine Ergebnisse ebenfalls über ein Message Passing abzusenden. Damit ist ein Informationsrundlauf beendet, der erfindungsgemäß in zwei Transaktionen - einer Frage-Transaktion und eine Antwort-Transaktion - zerlegt ist. Eine Transkation ist bildlich als Stichleitung vorstellbar.

Die erfindungsgemäße Flexibilität kommt daher, dass die Gesamtkommunikation aus diesen zwei Stichleitungen/Transaktionen besteht, der Frage-Transaktion und der Antwort-Transaktion. Zwischen beiden besteht nur eine logische Kopplung.

Die Antwort-Transkation geht üblicherweise an den ursprünglichen Client Client C, der die Frage-Transaktion abgesetzt hat. Es ist jedoch auch möglich, die Antwort-Transkation an eine andere Zieladresse zu senden.

Das Routing wird vollständig vom Micro Kernel durch die Business Logik erledigt, die konsequent durch Komponenten realisiert wird. Das Routing wird auf der Basis einer Datenbank, der Routing Datenbank, durchgeführt. So ist sogar eine Anpassung oder Erweiterung des Message Passing während des Betriebs möglich.

Eine Stichleitung/Transaktion muss bis zum deklarierten Ende bestehen bleiben. Durch die Zweiteilung in eine Frage/Antworttransaktion entstehen zwei Transaktionen. Deren Blockadezeit hängt vorteilhafterweise nicht von der angefragten Dienstleistung ab, sondern nur von technischen Gegebenheiten wie z.B. den Netzwerkverbindungen, der Anzahl der Rechner oder der Rechenleistung.

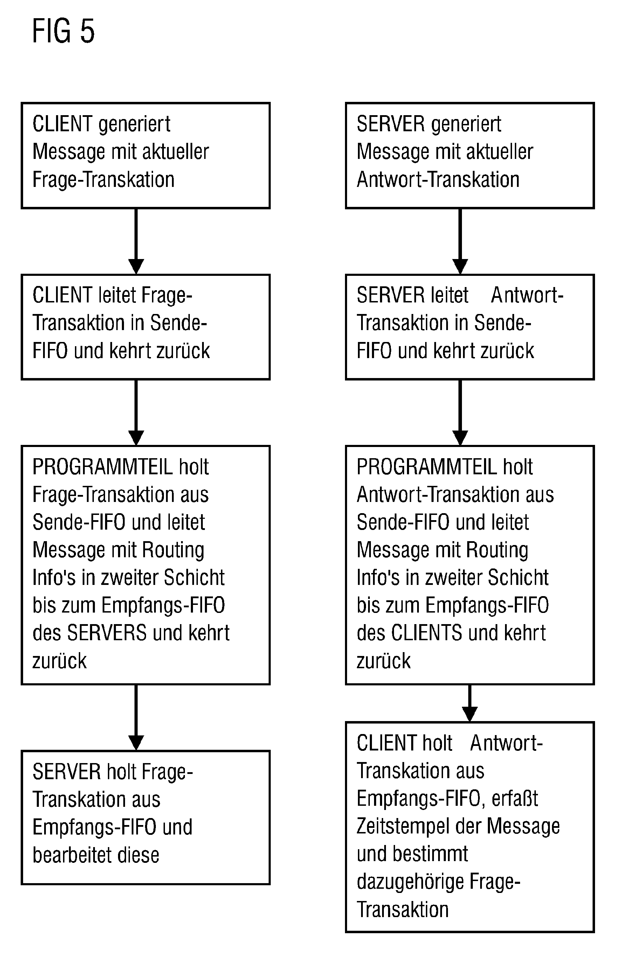

In Figur 5 ist ein Flow Chart gezeigt, das den grundlegenden Ablauf des erfindungsgemäßen Verfahrens erläutert:

Dabei sind auf der linken Seite dieser Figur die Aktionen von Client C, einem Programmteil und dem Server S dargestellt, die die Frage-Transaktion betreffen, während auf der rechten Seite die Aktionen gezeigt sind, die die Antwort-Transaktion betreffen.

Ein Client C benötigt nun bestimmte Daten aus der Datenschicht 13 und generiert mit diesen aktuellen Argumenten eine Message 14. Diese Message betrifft zu diesem Zeitpunkt die Frage-Transaktion. Daraufhin schiebt der Client C die Message 14 in die Sende-Queue des Client C, die nach dem FIFO (First-In-First-Out) Prinzip organisiert ist und kehrt zurück. Der angesprochene Programmteil holt nun das oberste Element der Queue ab und leitet die Message 14 mit den codierten Routing Informationen durch die zweite Schicht von Server S zu Server S bis in eine Empfangs-FIFO des Server S und kehrt dann zurück. Nun kann der Server S die Message 14 bzw. den Frage-Teil aus der Empfangs-Queue auslesen und diese bearbeiten. Damit ist der erste Abschnitt des erfindungsgemäßen Serverauftrages erledigt. Nun muß das Ergebnis wieder an den ursprünglichen Client C oder eine andere Zieladresse zurück gesendet werden. Hierzu generiert der Server S wiederum eine Message 14 nach dem gleichen Prinzip, die in diesem Fall die Antwort-Transaktion codiert und stellt sie in die Sende-FIFO des Server Server S, um danach zurück zu kehren. Nun kann der Programmteil die Antwort-Transaktion aus der Sende-FIFO auslesen und anhand der Routing Informationen bis zur Empfangs-FIFO des Client C innerhalb der zweiten Schicht 12 weiter routen, um danach zurück zu kehren.

Der Client C holt die Message 14 nun aus der Empfangs-FIFO des Client C und erfaßt den Zeitstempel, der die Message 14 eineindeutig identifiziert. Über den Zeitstempel im Millisekunden Bereich kann er eindeutig die dazugehörige Frage-Transaktion bestimmen und sozusagen die zweiteilige Struktur (Frage-Antwort) in eine einteilige (Auftrag) zusammensetzen. Der gesamte Auftrag ist nun abgeschlossen.

Die Kommunikation hinsichtlich der Aufrufe ist mit der Komponententechnik realisiert. Hierbei ruft ein Komponenten Client einen Komponenten Server nur über dessen öffentliches Interface auf. Das Programm wird dann durch eine angehängte und abgekapselte Komponentenklasse realisiert. Der Begriff "Öffentlichkeit" im Zusammenhang mit dem Interface bedeutet, dass es eine Definition erfährt, die in jedem Rechner global einsehbar, es eineindeutig identifiziert und auch über Rechnergrenzen erfragbar ist. Erreicht wird dies durch Verwendung von GUIDs (Globally Unique Identifier) für das Interface, die Komponentenklasse, Ressourcen und vieles mehr.

Ein Interface bzw. die Schnittstelle stellt eine Sammlung von Funktionen mit Aufrufparametern dar. Diese können grundsätzlich jeden Typ annehmen. In der bevorzugten Ausführungsform wird "String" als genereller Standardtyp verwendet. Damit steht ein generischer Typ zur Verfügung, der ein Message Passing für alle nur denkbaren Entwicklungen erlaubt. Dies wird realisiert durch den Aufruf einer Komponente über eine ihrer Funktionen, der dann bis zu seiner Beendigung blockiert. Innerhalb dieser Funktion wird die mitgegebene Message umgewandelt und interpretiert. Erst nachdem dies geschehen ist, gibt sie den Programmfluss wieder an den Aufrufer zurück.

Das Message Passing wird realisiert durch "textuelle Messages". Es wird durch denjenigen Textcode realisiert, der für die jeweilige Zielplattform nativ ist. Bei Windows und vielen UNIX Plattformen ist dies UNICODE.

Eine Message setzt sich aus mehreren Bereichen zusammen, die sich darin unterscheiden, dass sie entweder als eigenes Argument auftauchen, oder zu einem String mit definiertem Trennzeichen wie folgt zusammengesetzt werden:

"Kategorie.Subsystem.Befehlsgruppe.Befehl + Datenfeld".

Das Datenfeld setzt sich im allgemeinen aus den folgenden Stringbereichen zusammen: Quellname|Steuerfeld|Nutzdaten.

Abkürzend wird folgendes vereinbart: Der "Kategorie.Subsystem.Befehlsgruppe" Teil der Message wird Message Pfad genannt. Der Teil "Befehl + Datenfeld" bekommt den Namen Token, da er unverändert durch das System durchgereicht wird.

Eine Message 14 setzt sich also immer aus Message Pfad und Token zusammen.

Der Message Pfad realisiert eine Hierarchie, die eine relationale Beziehung festlegt, die das Routing eindeutig von der Wurzel bis zum Ziel ermöglicht. Wie bei relationalen Beziehungen üblich, gilt die Eindeutigkeit nur von links nach rechts im Message Pfad bzw. oben nach unten.

Der Message Pfad bezeichnet ein Ziel, das mit einem Subsystem identisch ist. An dieses wird der Token abgeliefert.

Diese Hierarchie identifiziert die Schlüssel einer Routing Datenbank.

Der Schlüssel Kategorie stellt die erste Ebene der Hierarchie dar. Ist er identifiziert, wird in der zweiten Ebene durch den Schlüssel Subsystem eine weitere Verzweigung festgelegt. Die Befehlsgruppe verzweigt als dritte Ebene und ermöglicht die letzte Verzweigung, die durch den Befehl im Token selbst festgelegt wird.

So ergibt sich in Anlehnung an ein hierarchisches Filesystem eine Art Directory, das eine eindeutige Identifizierung eines Files erlaubt, das in dieser Analogie dem Token entspricht. Die eindeutig identifizierbaren Schlüssel dienen zum Abspeichern der jeweiligen Aufrufinformationen der verschiedenen Komponenten der jeweils nächst tieferen Ebene.

Der Vorteil des Hinzufügens eines Message Pfades liegt in dem potentiellen Einsatz gleicher Befehle für unterschiedliche Subsysteme oder solche mit unterschiedlichen Datenfeldern. Der Message Pfad kann über eine externe Datenbank realisiert werden.

Jede Ebene wird durch eine Komponente im Middle Tier 12 oder Micro Kernel realisiert. Unter einem identifizierten Schlüssel sind alle Informationen abgelegt, die für einen Aufruf einer Software Komponente nötig sind. Für jeden Schlüssel gibt es eine Komponente. Die Gesamtheit dieser Routing Komponenten stellt die Business Logik im Micro Kernel oder Middle Tier 12 dar. Diese Komponenten müssen nur einmal entwickelt werden. Es bieten sich mehrere Tools dazu an. Im Fall von MS Com gibt es Visual Basic oder Visual C++ und ATL.

Da parallel mehrere Stichleitungen betrieben werden, können einige Routing Komponenten potentiell in verschiedenen Threads gleichzeitig aufgerufen werden. Dies ist ein klassischer Fall für eine Threadsynchronisierung. Im Falle der erfindungsgemäßen Architektur entfällt sie komplett, indem zum einen lokal erzeugte Daten und Ressourcen genutzt und globale Daten nur gelesen werden. In C++ wären dies die automatischen Variablen und die Klassenattribute.

Dies hat die Folge, dass bei MS Com der Multi Threaded Appartement (MTA) Typ verwendet wird. Hierbei liegt es in der Verantwortung der Komponente, ob sie ihre Attribute (komponenten-globale Daten) synchronisiert, da jeder Thread auf jeden Fall in die Komponente eintritt. Im Falle dieser Architektur werden sie maximal lesend verwendet, also wird der eintretende Thread nirgends blockiert. Dies führt zu einer optimalen Granularität, die bis in die Threadwechselzeiten hinabreicht.

Um die Arbeit von Object Request Broker wie MTS/Com+ oder CORBA nutzen zu können, müssen die Komponenten des Micro Kernel sich der "Just In Time Aktivierung" dieser Broker bewusst sein. Dies hat zur Folge, dass die oben erwähnten automatischen Variablen oder Ressourcen besonders erzeugt und freigegeben werden müssen. Dies unterscheidet sich grundsätzlich vom Konstruktor/Destruktor Ansatz des Klassenkonzepts.

Falls neue Routen hinzugefügt werden sollen, ist kein Programmtext zu ändern, da erst zur Laufzeit der Komponenten die Aufrufe über die Routing DB aufgelöst werden. Dies setzt eine gelungene Absprache zwischen den Subsystemen voraus, da der Token ganz konkrete Daten enthält, durch die Fehler ausgelöst werden können. Aber auch hier kann die Middle Tier 12 mithelfen, Fehler zu visualisieren. Da die ganze Message 14 aus dem Datentyp Text besteht, ist sie zu jedem Zeitpunkt und in jeder Ebene im Klartext, also unverschlüsselt, zu kontrollieren. Belegt man z.B. das Datenfeld eines Tokens, der eine Anfrage an eine Datenbank per "Select" durchführen soll, mit dem kompletten Select String, so ist dieser aktuell erzeugte dadurch im Klartext einzusehen.

Neue Befehle werden hinzu gefügt, indem ein neuer Eintrag in der Routing Datenbank vorgenommen wird. Die Realisierung findet dann komplett in den beiden Subsystemen statt, die über die Messages 14 miteinander reden wollen.

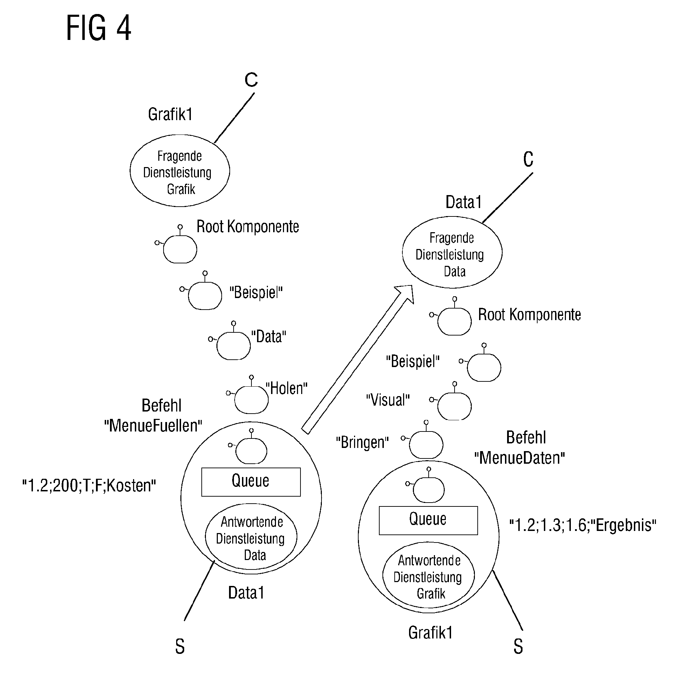

Im folgenden soll im Zusammenhang mit Figur 4 beispielhaft gezeigt werden, wie das Message Passing bei der erfindungsgemäßen Architektur durchgeführt wird.

Der Startpunkt ist ein fragendes Subsystem Grafik, das eine Maske realisieren soll. Diese Maske erfragt alle Informationen, die zur Darstellung einer gewissen Treffermenge notwendig sind. Das Subsystem Grafik nutzt sie um einen SQL Select String für das Datenfeld zu erzeugen und verbindet ihn mit einem zuvor spezifizierten Befehl zu einem Token "Get.Grafik.0.SELECT ... ", wobei "Grafik" der Name des sendenden Subsystems und "0" der Inhalt des Steuerfeldes ist.

Um den Token zum richtigen Ziel führen zu können wird nun der Message Pfad festgelegt: "Beispiel.Visual.Holen". Auch dieser ist Gegenstand der vorausgehenden Spezifikationen. Diese sind unabhängig von der hier beschriebenen Architektur.

Der komplette Aufruf lautet also "Beispiel.Visual.Holen.Get.Grafik.0.SELECT ...".

Mit diesen Strings wird eine Wurzel Komponente des Micro Kernel aufgerufen. Dies ist die Standard Interprozesskommunikation, die bei allen Übergängen zwischen den Schichten bzw. von einem Subsystem zum Micro Kernel immer gleich ist. Es wird immer dieselbe Wurzel Komponente aufgerufen, die immer der Standard Einsprungpunkt einer Aufrufkette oder Stichleitung ist, wie sie im folgenden beschrieben wird. Auch ist sie die sogenannte Transaktionswurzel, d.h. hier fängt die Transaktion an.

Ihre erste Aktion besteht im Interpretieren des Message Pfades. Hier dient die Kategorie "Beispiel" als Schlüssel, um aus der Routing Datenbank die Aufrufinformationen für die nächst tiefere Komponente erfragen zu können. Diese wird dann auch sofort aufgerufen, wobei der Message Pfad und der Token einfach durchgereicht werden.

Diese Komponente der Ebene Kategorie arbeitet nach demselben Prinzip wie die Wurzel Komponente: Interpretation des Message Pfades ("Visual"), Heraussuchen des Schlüssels aus der Routing Datenbank und Gewinnen der Aufrufinformationen. Das Ergebnis ist der Aufruf einer Komponente, aus der um eins tiefer gelegenen Ebene namens Subsystem.

Diese Komponente arbeitet nun wiederum nach dem selben Prinzip und ruft seinerseits eine Komponente "Holen" aus der Ebene Befehlsgruppe auf.

Insgesamt wird eine Auftrag in rekursive Aufrufe an die jeweiligen Server S umgesetzt. Jede Ebene kann beliebig viele Komponenten enthalten. Deshalb ist der Aufrufpfad auch nur von oben nach unten eindeutig und nicht umgekehrt.

Die Ebene Befehlsgruppe ist die direkte Aufrufschicht der Subsysteme. Sie enthält die Clients C der Subsysteme und ist die Grenze des Middle Tier (oder Micro Kernel) 12 zu einem Subsystem.

In diesen Komponenten, im Gegensatz zu den obigen, wird der Befehl nicht mehr weiter interpretiert. Der Token im Beispiel "Get.Grafik.0.SELECT ..." wird so an das Subsystem weitergegeben. Der Message Pfad muss deshalb sicherstellen, dass mehrere, gleichartige Befehle von dem selben Subsystem abgearbeitet werden. Diese letzte Komponente des Micro Kernel weiß implizit, oder holt explizit die Information (GUID), wie das spezielle Subsystem aufgerufen werden muss. Dies bedeutet, dass es sinnvoll ist für jedes Subsystem nur eine korrespondierende Komponente in der Ebene Befehlsgruppe zu implementieren, da sie sich dann nicht mit einer Anfrage bei der Routing Datenbank beschäftigen muss. In diesem Fall ist implizites Wissen nötig, da im Token selbst keine Information über das Ziel Subsystem enthalten ist. Diese steckt alleine im Message Pfad. Deshalb ist bei der Implementierung einer neuen Message in der mittleren Schicht 12 kein Code und in den Subsystemen der ganze Code zu implementieren.

Der Befehl "Get.Grafik.0.SELECT ..." mit seinem Select String im Datenfeld wird nun an das entsprechende Subsystem Data weitergereicht. Falls es das falsche Subsystem sein sollte, so liegt der Fehler im Message Pfad, der das Routing leistet. Das Senden an das Subsystem läuft wieder über einen Komponenten Aufruf ab. Aus der Komponente der Ebene Befehlsgruppe wird das Subsystem als Server aufgerufen.

Dazu muss das Subsystem eine Komponente mit Interface sein. Um eine Entkopplung zum Middle Tier 12 herzustellen, dient die Komponenten Klasse, die über das Interface direkt aufgerufen wird. Sie dient nur dazu, die empfangenen Informationen in eine Queue abzulegen und dem restlichen Subsystem seine Ankunft zu signalisieren.

Das restliche Subsystem läuft in mindestens einem Worker Thread, um einen eigenen Ausführungspfad zu besitzen.

Dadurch kann die Komponenten Klasse sofort terminieren und die Transaktion damit erfolgreich beenden.

Einmal im Subsystem Data angekommen, ist die Stichleitung oder Transaktion abgeschlossen und die beteiligten Komponenten terminieren auch erfolgreich.

Da dies nur die halbe Aktion für die Abarbeitung des Auftrages ist, muss nun eine Antwort wieder zurück geroutet werden. Dies geschieht nun auf die exakt gleiche Weise wie die Frage abgeliefert wurde.

An dieser Stelle kommt das Micro Kernel Prinzip zur Anwendung. Im Gegensatz zum Multi Tier Modell kann hier jedes Subsystem zum Top Level werden und per Message Passing einen Befehl an den Bottom Level schicken. In dem vorstehend unter Bezugnahme auf Figur 4 beschriebene Beispiel ist es das ehemals fragende Subsystem Grafik. Die Frage ging von Grafik nach Data über eine Transaktion und die Antwort soll nun von Data nach Grafik geschickt werden. Ist diese zweite Transaktion ebenfalls beendet, so sollte im Subsystem Grafik der Recordset der Ergebnismenge angekommen sein um visualisiert zu werden. Dabei wurde nirgends eine Festlegung notwendig, dass das Quellsubsystem auch wieder das endgültige Zielsystem sein muss. Vielmehr muss es als befehlsinhärente Information bei Implementierung dieses Befehles abgesprochen und spezifiziert worden sein. Als allgemeingültige Zusatzinformation steht im Frage Token die Quelle zur Verfügung. Daraus kann eine Bedingung abgeleitet werden, ob wieder zurück geroutet werden soll, oder ein neues Ziel nötig wird. Daraus ist zu erkennen, dass die Befehle genau die Stelle in dieser Architektur sind, wo die Applikationsspezifika adressiert werden. Deshalb ist es sinnvoll, für den Einsatz von Debugging oder Case Tools, unter den Befehlsschlüsseln auch eine Spezifikation mit abzulegen. Da der Datentyp String verwendet wird, fällt es sehr leicht auch diese Information beim Aufruf der Routing Datenbank weiterzuleiten.

Da die Zeit, in der die Stichleitung existiert, im überwiegendem Maße von der Zugriffsgeschwindigkeit auf die Routing Datenbank abhängt, ist hier ein weites Feld für Design Entscheidungen. Bei nicht so kostspieligen Systemen, kann man z.B. einfache Files verwenden oder bei Windows 2000 die InMemoryDataBase des Com+ Systems einsetzen. Geht es um komplexe Befehlsstrukturen auf High Performance Systemen, so kann auch eine Oracle DB eingesetzt werden.

Auf jeden Fall ist es von Bedeutung, dass der gesamte Ablauf der Informationsbeschaffung durch das Middle Tier 12 streng zweigeteilt ist. Es sind dann zwar auch zwei Transaktionen beteiligt, aber keine von beiden ist in ihrer Blockadedauer vom befehls-spezifischen Problem abhängig. Diese Zeit liegt komplett zwischen den beiden Transaktionen und garantiert somit die Asynchronität zwischen Frage und Antwort. Dies verlagert die Aufgabe der Synchronisierung der beiden Transaktionen komplett in die Subsysteme. Nur hier können zum Beispiel gegenseitige Überholungen von Antworten wieder bereinigt werden.

Dies ist sehr günstig für die Forderung nach hoher Skalierbarkeit. Durch viele, kleine und determinierte Blockadezeiten ist i. a. eine viel bessere Skalierung möglich, als durch die wenigen und lang anhaltenden, die bei dem bekannte Multi Tier Modell aus dem Stand der Technik auftreten. Dazu kommt noch die Tatsache, dass die unterschiedlichen Leistungsanforderungen immer mit ein und derselben Software erfüllt werden, da ja die Architektur unverändert bleibt und nur die Rechenleistung durch den Einsatz einer höheren Anzahl von Rechnern erhöht wird.

Vorteilhafterweise ist eine Verteilung auf verschiedene Rechner von Teilen des Gesamtsystems bis herunter zu den Komponenten möglich.

Die Frage/Antwort-Transkationen müssen jedoch nicht notwendigerweise, wie hier im Beispiel geschildert, zeitlich nacheinander ablaufen. In jedem Moment kann jedes Subsystem von jedem anderen Dienste anfordern. Genau hier hat diese Architektur ihre Stärken. Durch die Zweiteilung der Transkationen, werden innerhalb einer Transaktion keine Daten gesperrt. Dies geschieht komplett in der Zeit dazwischen und nur im dienstleistenden Subsystem und nicht im Micro Kernel. Die Frage der Sicherung muss auf einer höheren Protokoll Ebene zwischen den Subsystemen ausgehandelt werden. Dazu sind spezielle Messages vorstellbar, die z.B. einen Drei Wege Handshake realisieren. Da aber keine Daten gegen andere Aufrufe geschützt werden müssen, darf jede Komponente mehrere Instanzen gleichzeitig aktiv halten.

Ist, unter der Annahme eines linearen Anwachsens des Ressourcenverbrauchs mit der Anzahl der Messages, ein Engpass zu erwarten, so ist ein Objekt Broker wie MTS, COM+ oder CORBA einzusetzen. Sie reduzieren diese lineare Abhängigkeit mit der Hilfe von Just In Time Aktivierung, Objekt Pooling, Thread Pools und Load Balancing.

Da der wichtigste Teil, die Kommunikation zwischen den Subsystemen, mit dem Message Passing unverändert bleibt, bleibt es für die Komponenten transparent, ob sie eine Dienstleistung im selben Rechner erfragen, oder über Rechnergrenzen hinaus (Bsp.: COM/DCOM). Der gleichzeitig verwendete Micro Kernel erlaubt diesen skalierenden Ansatz sogar bis ins Subsystem hinein. Da alle Features hier implementiert werden, sind auch hier Performance Verbesserungen über den Ansatz der Verteilung auf mehrere Rechner zu erreichen. Neue Features, die meistens mit höherer Rechenzeitanforderungen einhergehen, sind so ohne Neukompilierung anfügbar.

Eine Forderung nach leichter Anpassbarkeit ist durch das Herausführen der spezifischen Befehle in die Routing Datenbank erfüllt. Die unterschiedlichen Anforderungsprofile werden durch die jeweilige Anpassung der Routing Datenbank realisiert. Es ist auch vorstellbar ein eigenes Tool zu entwickeln, das die abstrakte Information in der Routing Datenbank visualisiert. Somit sind Erweiterungen und Wartungen am System ohne Programmierkenntnisse möglich.

Da nur Komponenten als tragende Software Elemente verwendet werden, und alle spezifischen Dinge wie Features und Algorithmen in den Subsystemen konzentriert vorliegen, ist eine evolutionäre Weiterentwicklung einfach möglich. Im jeweiligen Subsystem liegen alle Software Module vor, die mit dem jeweiligen Problemkreis zu tun haben. Also kann immer der alte Code weiterverwendet werden, indem er vom neuen innerhalb des Subsystems einfach direkt aufgerufen wird. Anschließend wird das neue Subsystem ins System eingefügt, das ja wegen der Beibehaltung der Architektur von den Änderungen nichts bemerkt.

Eine weitere Variante, alten Code weiter zu verwenden ist, dass komplette Applikationen von einer Komponenten Hülle umgeben werden, die für alle Daten Anpassungen sorgt, die diese Applikation erwartet. Durch dieses Vorgehen ist sichergestellt, dass die alte Applikation nach außen eine Komponente darstellt und nach innen immer noch arbeitet, als ob sie direkt vom Betriebssystem aufgerufen werden würde. Wenn man nun diese Komponente mit dem Standard Interface der Architektur für Subsysteme versieht, kann sie als solche auch standardmäßig eingebunden werden. Dadurch erhält die alte Applikation alle Messages von den anderen Subsystemen, auch wenn diese viel später und deshalb optimaler abgestimmt entwickelt wurden. Aufgrund des Micro Kernel ist auch keine Positionierung dieser alten Applikation in der starren Multi Tier Struktur nötig.

Auf diese Art und Weise könnte der NetManager vor der Version 5.X nachträglich eine mittlere Schicht bekommen, die er als Objekt Broker (MTS,COM+) nutzen kann.

Aufgrund der Verwendung von Komponenten ist ein Patching leicht durchführbar. Ist eine Komponente als fehlerhaft erkannt, so wird sie als einziges Objekt verändert und neu compiliert. Der entscheidende Punkt ist, dass man darauf achtet die eineindeutigen Charakteristika einer Komponente, ihre GUIDs, dabei nicht zu ändern. Wieder eingefügt wird sie durch einfaches Überschreiben des Zugriffpfades in der Komponentenverwaltung ( bei Windows in der Registry) oder durch Überschreiben der Komponente auf der Festplatte. Falls es sichergestellt ist, dass sie in diesem Moment nicht aufgerufen wird, kann dies auch im laufenden Betrieb geschehen.

In der erfindungsgemäß realisierten mittleren Schicht 12 werden die Argumente der Funktionen nur kopiert oder dazu verwendet Routing Informationen abzuleiten. Die empfangende Funktion kann mit einem C Pseudo Code wie folgt dargestellt werden:

```
        BSTR Ccomponente::bstrPassing(     BSTR Kategorie,

                                BSTR Subsystem,

                                BSTR Befehlsgruppe,

                                BSTR Befehl,

                                BSTR Zeitstempel,

                                BSTR Steuerfeld,

                                BSTR Ursprung,

                                BSTR Quellname,

                                BSTR Zielname,

                                BSTR Nutzdaten )

    {

        .........

        return bstrErgebnis;

    }
```

, wobei BSTR ein MS COM spezifischer Datentyp ist, der einen String bestimmter Länge darstellt.

Es sei betont, dass die Beschreibung der für die Erfindung relevanten Komponenten des Netzes grundsätzlich nicht einschränkend zu verstehen ist. Für einen einschlägigen Fachmann ist insbesondere offensichtlich, dass die verwendeten Begrif fe funktional und nicht physikalisch zu verstehen sind. Somit können die Komponenten auch teilweise oder vollständig in Software und/oder über mehrere physikalische Einrichtungen verteilt realisiert werden.

**Patentansprüche**

1. Verfahren zur Steuerung eines Applikationsprozesses in einem verteilten System mit mindestens einem Client (C) und mindestens einem Server (S), bei dem das System nach einem Multi-Tier-Modell organisiert ist und zumindest eine erste Präsentationsschicht (10), eine zweite Schicht (12) und eine dritte Datenschicht (13) umfaßt,

**dadurch gekennzeichnet, daß**

die zweite Schicht (12) vollständig als micro-kernelbasiertes Client/Server-System organisiert ist und dass zwischen der ersten und zweiten Schicht (10, 12) eine Schnittstelle in Form einer Message (14) festgelegt ist, wobei ein Serverauftrag zumindest folgende Schritte umfaßt:

- der Client (C) übersetzt den Serverauftrag in eine Message (14) mit den jeweiligen Argumenten,
- der Client (C) sendet die Message (14) an den Server (S),
- der Auftrag wird gegebenenfalls weitergeleitet und vollständig abgearbeitet und
- das Ergebnis des Auftrages wird anhand der Message (14) zurückgesendet.

2. Verfahren nach Anspruch 1,
   **dadurch gekennzeichnet, daß**
   die zweite Schicht (12) und/oder dessen Komponenten ausschließlich für ein Routing des Serverautrages ausgelegt ist.

3. Verfahren nach mindestens einem der Ansprüche 1 oder 2,
   **dadurch gekennzeichnet, daß**
   der Serverauftrag in eine "Frage-Transaktion" - ausgehend von dem Client (C) an den Server (S) - und in eine "Antwort-Transaktion" - ausgehend von dem Server (S) an den Client (C) - zerlegt ist, die physikalisch entkoppelt sind.

4. Verfahren nach mindestens einem der vorstehenden Ansprüche,
   **dadurch gekennzeichnet, daß**
   der Client (C) der ersten Schicht (10) und der Server (S) der zweiten und/oder dritten Schicht (12, 13) angehört.

5. Verfahren nach mindestens einem der vorstehenden Ansprüche,
   **dadurch gekennzeichnet, daß**
   der Server (S) nach Abarbeitung des Auftrages ein Ergebnis des Auftrages an den aufrufenden Client (C) oder eine andere Zieladresse sendet.

6. Verfahren nach mindestens einem der vorstehenden Ansprüche,
   **dadurch gekennzeichnet, daß**
   alle Adressen und/oder Rücksendeadressen für den Serverauftrag in der Message (14) - vorzugsweise dynamisch - codiert sind.

7. Verfahren nach mindestens einem der vorstehenden Ansprüche,
   **dadurch gekennzeichnet, daß**
   der Micro Kernel Subsysteme umfasst, die der zweiten Schicht (12) und/oder der dritten Schicht (13) angehören.

8. Verfahren nach mindestens einem der vorstehenden Ansprüche,
   **dadurch gekennzeichnet, daß**
   ein Serverauftrag weitere, vorzugsweise ineinander geschachtelte Serveraufträge umfassen kann.

9. Verfahren nach mindestens einem der vorstehenden Ansprüche,
   **dadurch gekennzeichnet, daß**
   die Rücksendung des Ergebnisses des Auftrags anhand von in der Message (14) enthaltenen Routing-Informationen vorzugsweise bis zum aufrufenden Client (C) erfolgt.

10. Verfahren nach mindestens einem der vorstehenden Ansprüche,
    **dadurch gekennzeichnet, daß**
    die Message (14) zumindest folgende Argumente umfaßt:

    - Ursprung, in dem die Adresse des aufrufenden Clients (C),
    - Quellname, in dem die Adresse des aufzurufenden Servers (S) und
    - Zielname, in dem die Rücksendeadresse für das Ergebnis codiert ist.

11. Verfahren nach Anspruch 10,
    **dadurch gekennzeichnet, daß**
    daß Ursprung und Zielname übereinstimmen oder unterschiedlich sind.

**12.** Verfahren nach mindestens einem der vorstehenden Ansprüche,
**dadurch gekennzeichnet, daß**
die Message (14) eines Clients (C) aus der ersten Schicht (10) stets unmittelbar an eine Wurzelkomponente des Micro Kernels der zweiten Schicht (12) gesendet wird, der die Message (14) dann an eine Verarbeitungskomponente weiterleitet.

**13.** Verfahren nach mindestens einem der vorstehenden Ansprüche,
**dadurch gekennzeichnet, daß**
die Verarbeitung in der zweiten Schicht (12) asynchron zu der Verarbeitung in der ersten und/oder dritten Schicht (12, 13) erfolgt.

**14.** Verfahren nach mindestens einem der vorstehenden Ansprüche,
**dadurch gekennzeichnet, daß**
daß ausschließlich ein Teil des Clients (C), der mit der zweiten Schicht (12) kommuniziert, für die Zeit zwischen dem Serveraufruf und der Absendung der Message (14) bzw. einem Empfang einer Bestätigung blockiert ist.

**15.** Verfahren nach mindestens einem der vorstehenden Ansprüche,
**dadurch gekennzeichnet, daß**
daß mehrere Aufrufe gegebenenfalls mehrerer Clients (C) in einer Queue gespeichert werden, die vorzugsweise nach dem FIFO-Prinzip arbeitet.

**16.** Verfahren nach mindestens einem der vorstehenden Ansprüche,
**dadurch gekennzeichnet, daß**
der Micro Kernel der zweiten Schicht (12) mehrere Subsysteme umfaßt, die ihrerseits in eine oder mehrere Komponenten aufgeteilt sind.

**17.** Verfahren nach mindestens einem der vorstehenden Ansprüche,
**dadurch gekennzeichnet, daß**
der Server (S), vorzugsweise alle Server (S) der zweiten Schicht (12), keine auftragsbezogenen Adressinformationen verwalten muß/müssen.

**18.** Client/Server-System zur Steuerung und/oder Realisierung eines Applikationsprozesses, das rechner-architektonisch so ausgelegt ist, daß es nach dem Verfahren nach zumindest einem der Ansprüche 1 bis 17 arbeitet.

**19.** Computerprogramm, das Instruktionen aufweist, die zur Ausführung des Verfahrens nach einem der Ansprüche 1 bis 17 eingerichtet sind.

**20.** Computerprogrammprodukt, das ein computerlesbares Medium mit Computerprogramm-Code-Mitteln aufweist, bei dem nach Laden des Computerprogramms der Computer durch das Programm zur Durchführung des Verfahrens nach einem der Ansprüche 1 bis 17 veranlaßt wird.

**21.** Vorrichtung zur Durchführung und/oder Organisation eines Applikationsprozesses in einem verteilten System, bestehend aus mindestens einem Client (C) und mindestens einem Server (S), bei dem das System nach einem Multi-Tier-Modell organisiert ist und zumindest eine erste Präsentationsschicht (10), eine zweite Schicht (12) und eine dritte Datenschicht (13) umfaßt,
**dadurch gekennzeichnet, daß**
die zweite Schicht (12) vollständig als micro-kernelbasiertes Client/Server-System organisiert ist und dass zwischen der ersten und zweiten Schicht (10, 12) eine Schnittstelle in Form einer Message (14) angeordnet ist, wobei die Vorrichtung zur Abarbeitung eines Serverauftrag zumindest folgendes umfaßt:

- ein Message-Generierungs-Modul, das zur Umsetzung des Serverauftrags in eine Message (14) mit den jeweiligen Argumenten ausgelegt ist,
- ein Sende-Modul, das zum Senden der Message (14) an den Server (S) bestimmt ist,
- eine Verarbeitungs-Einheit, die den Auftrag gegebenenfalls weiterleitet und vollständig abarbeitet und
- ein Rücksende-Modul, das das Ergebnis des Auftrages anhand der Message (14) zurück sendet.

**22.** Vorrichtung nach Anspruch 21,
**dadurch gekennzeichnet, daß**

die Vorrichtung eine Rechnerarchitektur aufweist, die zur Ausführung des Verfahrens nach zumindest einem der Ansprüche 1 bis 17 ausgelegt ist.

# FIG 1
## Stand der Technik

Multi Tier Modell

GUI, HTML-Sites,
Buttons, Dialog,...

10

COM      DCOM      Return-Values

Zusammenbau der
SELECTS/UPDATES/INSERTS/DELETES
Anpassung an die Datenbankanbindung

12

ODBC      OLE DB

Datenbank Management
Systeme

13

# FIG 2

Dienstleistungs server Grafik

Dienstleistungs server Bildverarbeit.

Dienstleistungs server Grafik

(1)

Dienstleistungs server Presentation2

Middel Kernell
= =
Middel Tier

(2)

Dienstleistungs server Konnektivität

(3)

(4)

Dienstleistungs server Konnektivität

Dienstleistungs server Simulation

Dienstleistungs server Echtzeit

Dienstleistungs server Datenablage2

# FIG 3

10 { **GUI Management System**

Presentation Layer

Micro Kernel == Middle Tier

Wurzel Komponente als Transaktions Wurzel

Identifikation der Message Kategorie

Kategorien

12 {

14

Subsysteme

Messages

Befehlsgruppen

Data Access Layer

13 {

**Datenbank Management Subsystem**

**Open Connection Management Subsystem**

**Communication Subsystem**

# FIG 4

C

Grafik1

Fragende
Dienstleistung
Grafik

C

Data1

Fragende
Dienstleistung
Data

Root Komponente

"Beispiel"

Root Komponente

"Data"

"Beispiel"

"Holen"

"Visual"

Befehl
"MenueFuellen"

"Bringen"

Befehl
"MenueDaten"

Queue

"1.2;200;T;F;Kosten"

Queue

Antwortende
Dienstleistung
Data

"1.2;1.3;1.6;"Ergebnis"

Antwortende
Dienstleistung
Grafik

Data1

Grafik1

S

S

# FIG 5

| CLIENT generiert Message mit aktueller Frage-Transkation |
|---|

↓

| CLIENT leitet Frage-Transaktion in Sende-FIFO und kehrt zurück |
|---|

↓

| PROGRAMMTEIL holt Frage-Transaktion aus Sende-FIFO und leitet Message mit Routing Info's in zweiter Schicht bis zum Empfangs-FIFO des SERVERS und kehrt zurück |
|---|

↓

| SERVER holt Frage-Transkation aus Empfangs-FIFO und bearbeitet diese |
|---|

| SERVER generiert Message mit aktueller Antwort-Transkation |
|---|

↓

| SERVER leitet Antwort-Transaktion in Sende-FIFO und kehrt zurück |
|---|

↓

| PROGRAMMTEIL holt Antwort-Transaktion aus Sende-FIFO und leitet Message mit Routing Info's in zweiter Schicht bis zum Empfangs-FIFO des CLIENTS und kehrt zurück |
|---|

↓

| CLIENT holt Antwort-Transkation aus Empfangs-FIFO, erfaßt Zeitstempel der Message und bestimmt dazugehörige Frage-Transaktion |
|---|